# EUROPEAN PATENT APPLICATION

(11) **EP 1 938 951 A2**
(43) Date of publication of application: **02.07.2008**
(21) Application number: 07254726.8
(22) Date of filing: 06.12.2007
(51) Int. Cl.: B29C 65/44, B65B 7/28, B65B 51/22, B65D 77/20, B29C 65/18, B29C 65/04, B65B 31/02

(54) **Food container**

(30) Priority: 06.12.2006 GB 0624404
(71) Applicant: D2 Food Systems Limited, Harpenden Hertfordshire Al5 4UT (GB)
(72) Inventor: David Edwards c/o D2 Food Systems Limited, Hertfordshire AL5 4UT (GB)
(74) Representative: Mackenzie, Andrew Bryan

(57) **Abstract**

A container (30) having a plastic lid (34) and a metal tray (34) which are sealed together to form the container (30). The plastic lid (34) is preferably domed and has a sealing layer co-extruded, coated or laminated to it to bond the lid (34) and tray (32).

## Description

This invention relates to packaging and a method of sealing an aluminium food container with a plastic semi-rigid dome lid.

Pre-cooked and raw ready to cook pre-packed food is becoming more common. Increasing consumer preference is not to handle raw meat and poultry and, as a result of this, it is desirable that the sealed packaging that protects the food can also be used to hold the food whilst the food is being cooked.

One example of this is microwave meal packaging. Here the food is contained within a plastic tray, typically CPET or PP, that has a plastic film heat-sealed to it thereby isolating the food from the atmosphere. When a person wants to cook the food they can pierce the film or remove the film lid and place the food and its packaging into the microwave for cooking.

Whilst CPET is also suitable for oven cooking, if the food is to be cooked in an oven then it is preferable to use metal foil trays. Preferably the metal is aluminium. Aluminium is used because of the enhanced cooking properties aluminium has when compared to plastic. However, for protection, presentation and extended shelf life it is still desirable to seal the packaging by heat-sealing a film lid to the aluminium tray.

The application of sealing a film lid to a smoothwall aluminium foil tray with or without a modified or controlled atmosphere (MAP and CAP respectively) is now commonplace in the market. This is a flat seal across the rim of the tray and this restricts the usable depth and hence the depth of product that can be packed to the depth of the tray.

There is also a technical restriction on the depth that a smoothwall tray can be formed. This varies according to the width and length of the tray and, typically, for all sizes of one-half Gastronorme tray or less is approximately 100mm.

It is preferable, however to:
(a) package a product that is more than 100mm high, such as whole chickens, gammon joints, etc and also
(b) to cook products of 40mm or more in a shallow tray, thereby replicating the cooking properties of a traditional baking tray.

Hence, it is desirable to have a design of packaging where the product is contained in a foil tray with a dome lid, with or without a modified atmosphere for extended shelf life.

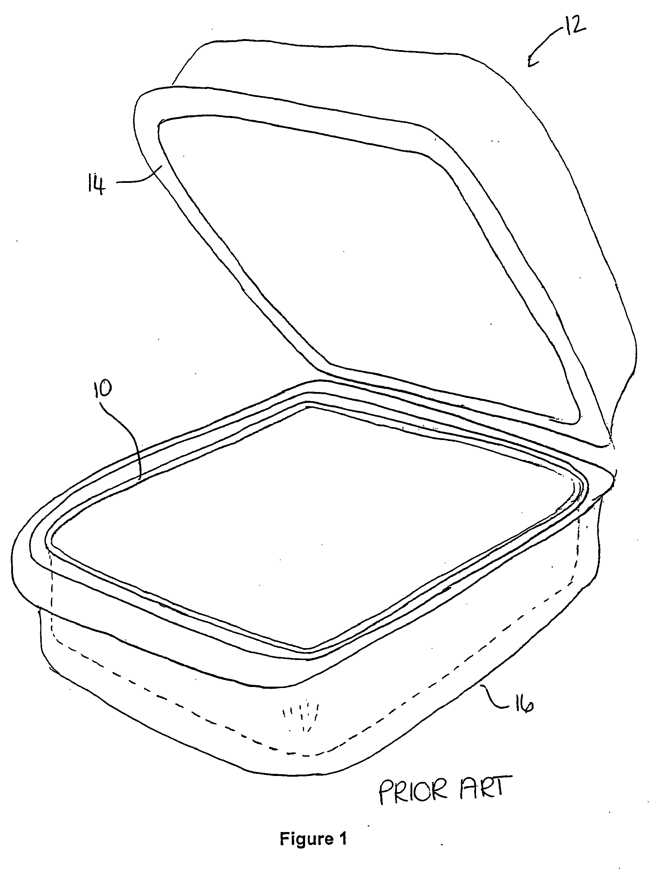

One solution to this that has been proposed is to place the metal tray 10 within a plastic holder 12 as illustrated in Figure 1. The plastic holder 12 comprises a top 14 and bottom 16 part which are heat sealed. The holder 12 is sealed around the metal tray 10 containing food using heat sealing to connect the top 14 and bottom 16 part.

However, packaging in this manner is expensive, labour intensive and means that the metal tray has to be removed from the plastic holder which may not be convenient to the user. Hence it is preferable for a plastic lid to be bonded directly to the metal tray.

Plastic can easily be bonded to another plastic as they soften when heated allowing the layers to bond together. However, metal does not soften at the same temperatures as plastics and, additionally, acts as a heat sink drawing any heat away from the plastic. There is therefore no reciprocal bonding between the materials and no seal is created. Heating the plastic further to mitigate the heat sink damages the plastic.

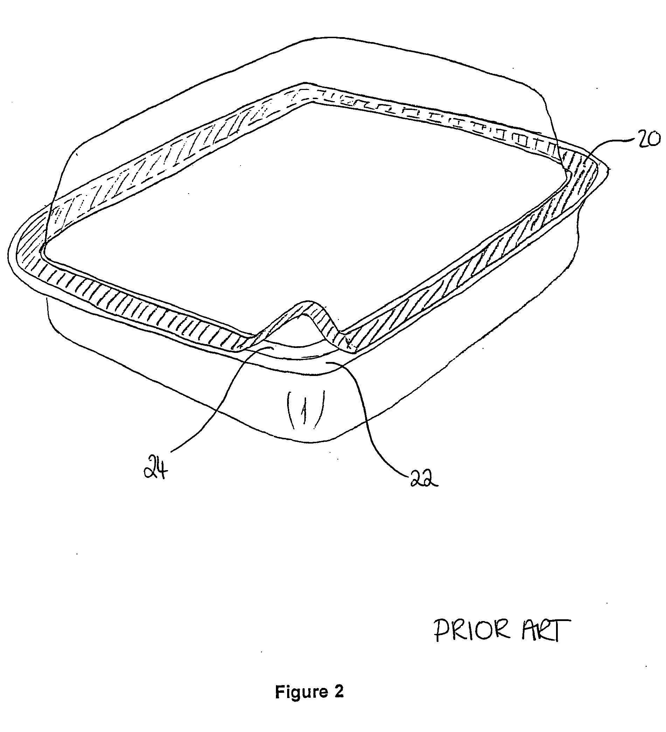

One proposed solution to this is the use of a sealing ring 20 as illustrated in Figure 2. The sealing ring 20 has a bonding layer and a backing layer. The backing layer prevents the heat degrading the plastic. The sealing ring 20 extends over both the lip of a metal tray 22 and the lip of a plastic lid 24 thereby enabling the bonding layer to bond to the metal 22 or plastic 24 as appropriate. Heat is then applied to the sealing ring 20 such that it bonds to both the metal tray 20 and the plastic lid 24. The presence of the backing layer prevents degradation of the plastic and the bonding layer.

The presence of an extra element increases the cost and complexity of the packaging however and it is preferable for the plastic lid to be joined directly to the metal tray.

Another proposed solution is the application of a heat-seal lacquer or hot melt in the area where the lip of the metal tray and the lip of the plastic lid overlap. However, the precise application of the heat-seal lacquer or hot melt to the required area is difficult and can result, for example, in the heat seal lacquer or hot melt dripping into the aluminium tray.

According to a first aspect of the present invention there is provided a method of sealing a container comprising a metal part and a plastic part having a thickness of at least 300 microns recited in Claim 1. The method may include the step of heat sealing the metal part to the plastic part.

Preferably the heat sealing is carried out by a first and a second heating element applied to complimentary sections of the respective metal and plastic parts. Increasing the temperature of the heating elements in combination with pressure causes the complimentary sections of the metal and plastic parts to bond together.

Advantageously the first heating element is heated to a temperature between 120°C and 200°C, the second heating element may be heated to a temperature between 50°C and 100°C directly to the plastic part.

Preferably, the metal and plastic parts are heated for between 1 and 2.5 seconds depending on the thickness of the dome lid, the tray and the temperature of these two components and the product being packed.

Alternatively, the metal part may be bonded to the plastic part by exposing the metal and plastic parts to a first and a second electrode respectively and causing the electrodes to emit radio frequency waves thereby causing the metal and plastic parts to hermetically sealed together.

The plastic part may be manufactured from APET, PVC or other base plastic material and preferably has the sealing layer co-extruded, coated or laminated to it, the sealing layer adapted to seal to the metal. The sealing layer may be a compatible sealing material adapted to form a peelable bond with a metal. Preferably the sealing layer has a thickness of approximately 5 microns if applied and 50 microns if laminated to the semi-rigid plastic.

The atmosphere within the container may be modified to a predetermined composition prior to sealing the container such that the packaging has a modified or controlled atmosphere.

Preferably, the metal part is a tray adapted to hold food and the plastic part is a domed lid for the tray.

According to a second aspect of the present invention there is provided a container comprising a metal part and a plastic part sealed together.

A specific embodiment of the present invention will now be described by reference to the following drawings in which:
Figure 1 illustrates a first prior art container;
Figure 2 illustrates a second prior art container;
Figure 3 illustrates a container in accordance with the present invention;
Figure 4 is a flow chart illustrating a method of sealing the container of the present invention; and
Figures 5a to 5f illustrate a method of introducing a modified or controlled atmosphere into the container prior to sealing it.

The present invention is concerned with the bonding of a semi rigid plastic lid to a metal tray. By semi-rigid plastic it is meant that the plastic keeps its shape when a small force is applied. This is in contrast to plastic film which has no rigidity. Preferably, the lid is dome shaped such that food-stuff that extends above the tray can be sealed within the packaging; however any suitable shape may be used.

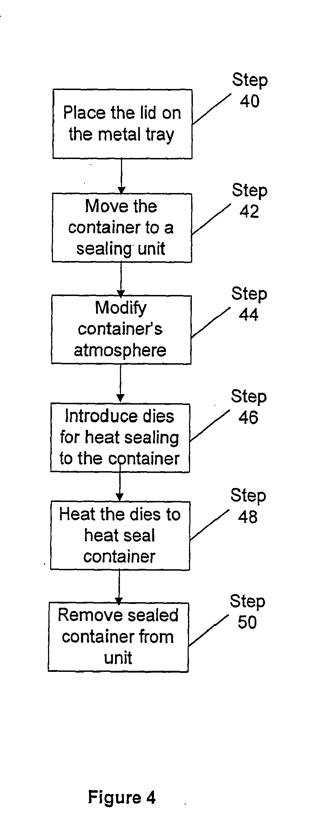

Figure 4 illustrates an embodiment of the container 30 of the present invention. The container 30 includes a metal tray 32 having a semi-rigid plastic lid 34. The metal tray 32 is preferably a smooth wall tray made from aluminium, having a minimum thickness of approximately 80 microns. The aluminium tray 32 is provided with a rim on which the plastic lid 34 can rest. The rim may be provided with a raised lip (not shown) around its outer circumference.

Although the present invention will be described with reference to aluminium it will be understood by one skilled in the art that any suitable metal may be used.

The plain aluminium tray 32 may optionally be provided with a heat-sealable coating or sealing layer, typically a modified epoxy layer, such as a PE/epoxy layer, laminated onto the aluminium at least in the region of the rim upon which the plastic lid 34 is to be bonded. The presence of the modified epoxy layer may result in a stronger seal between the aluminium tray and the lid.

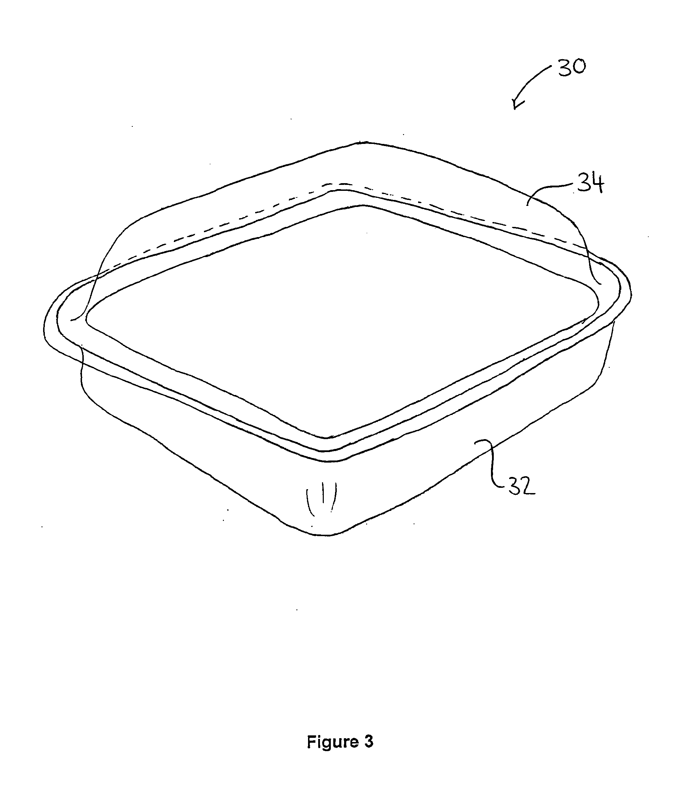

The lid 34 may be dome-shaped as shown in Figure 3 or have any other suitable shape. Advantageously, a collapsible panel (not shown) may be provided in the lid 34. The panel is arranged so that, if gas within the sealed container is absorbed into the meat the panel collapses thereby reducing the volume of the sealed container. This reduces any distortion caused to the sealed container by the absorption of air by the contents of the container. The panel may be, for example, formed on the top of the dome and be provided with a weakened circumference to aid the collapse of the panel.

Optionally, the dome may be provided with ribs (not shown) to strengthen the lid and prevent the entire lid from collapsing. The ribs may be placed in any suitable arrangement on the lid.

A rim is provided on the dome which contacts the rim on the aluminium tray. Optionally, the rim may be provided with a raised portion arranged to receive the lip on the rim of the metal tray. This enables the correct placement of the lid relative to the tray.

Preferably, the lid is made from a plastic material. The plastic material may be an injection-moulded or thermoformed plastic. Preferably, the plastic is polyvinyl chloride, amorphous polyester terephthalate (APET) or any other suitable plastic without laminate applied. Advantageously the plastic is transparent and has a minimum thickness of approximately 300 microns. Preferably the plastic has a thickness of 500 microns.

The lid is provided with a sealing layer distributed across its inner surface. The sealing layer may be co-extruded, coated or laminated to the base plastic layer of the lid. Optionally, the sealing layer may have an additional anti-fog coating applied.

For the purposes of the present application extrusion is taken to mean forcing raw materials through a barrel and forming die under pressure and heat. In the case of film the plastic is formed as a sheet. Lamination is taken to mean the bonding of two sheets using pressure and heat by passing the sheets through rollers. Finally, coating is taken to mean spraying the sealing layer onto the base layer.

Preferably the sealing layer has a minimum thickness of approximately 5 microns if the sealing layer is applied to the plastic material and with a minimum thickness of 20 microns if the sealing layer is laminated to the plastic material. Preferably, the thickness of the sealing layer, if laminated, is 50 microns. The sealing layer may be formed by multiple lamination steps.

The sealing layer is a compatible sealing medium that is able to provide a hermetic seal to metal and plastic such that they can be peeled apart without delamination between the semi-rigid plastic and the sealing layer. The sealing layer is applied or laminated to the plastic material at least on the surface of the plastic lid that contacts the metal tray.

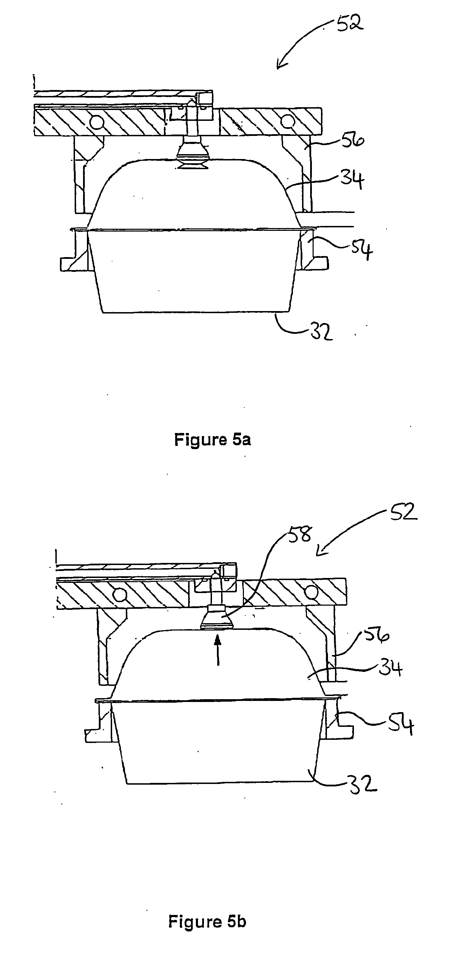

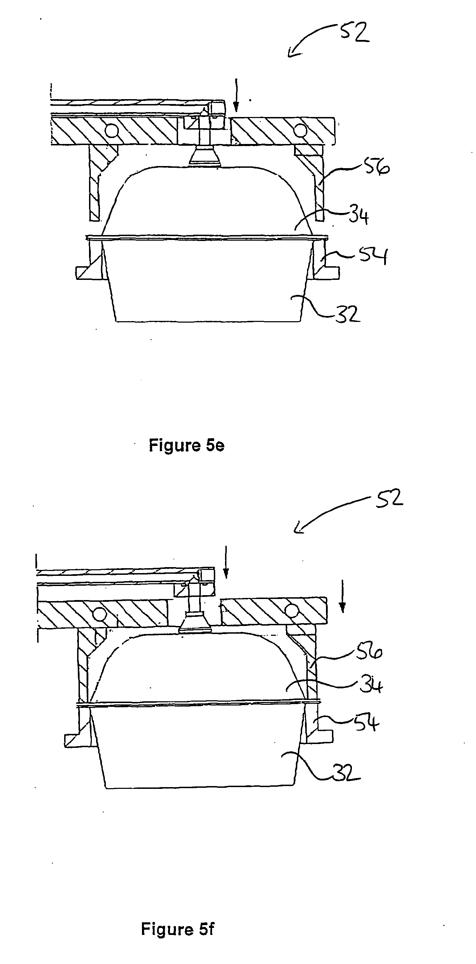

The method of sealing the container will now be explained with reference to Figures 4 and 5a to 5f. Firstly, in step 40 the lid is placed upon a metal tray containing food. The tray and lid are then moved to a sealing unit as illustrated in Figure 5f (step 42). The sealing unit contains a lower 54 and an upper 56 die. The tray 32 is placed upon the lower die 54, the lower die 54 including extensions which contact the underside of the rim of the metal tray 32. The upper die 56 covers the area to be sealed and therefore is placed on top of the plastic lid 34 (step 46).

The lower 54 and upper die 56 are heated so that the respective temperature of the metal tray 32 and the plastic lid 34 are raised (step 48). Preferably the temperature of the lower die 54 is between 120°C and 240°C and even more preferably the temperature is 180°C. Preferably the temperature of the upper die 56 is between 50°C and 100°C. Even more preferably the temperature of the upper die 56 is approximately 70°C. Heating the lower die 54 to a higher temperature speeds up the rate of bonding.

The heat is transmitted to the tray and plastic lid for approximately 1 to 2.5 seconds which, together with pressure, enables bonding between the aluminium and the sealing layer to occur. Once the container has been sealed it is removed from the sealing unit (step 50).

Alternatively, rather than sealing the container using heat, other means of sealing may be used. One example of such a means of sealing is radio frequency. In this method the steps are carried out as described above except, the lower and upper die are replaced by a lower and upper electrode. The upper and lower electrodes emit radio waves causing the lid and tray to seal together.

If desired a modified atmosphere may be introduced into the packaging as illustrated in Figures 5a to 5f (step 44 of Figure 4). In this instance, prior to sealing the lid, the tray 32 and lid 34 are introduced into the sealing unit 52as illustrated in Figure 5a.

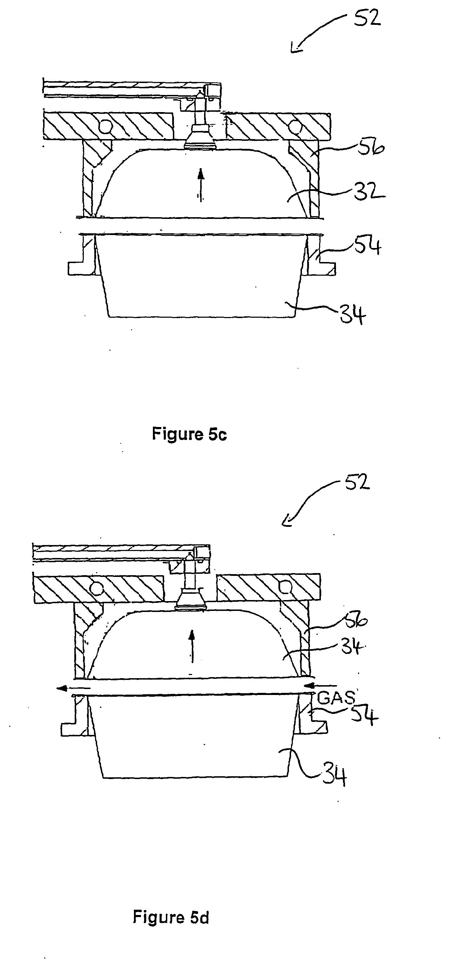

The lid of the container is then lifted as illustrated in Figure 5c. A complete or partial vacuum is then created within the container. This may be created by removing air from the container directly as illustrated in Figure 5b using an air outlet 58 in fluid communication with the inside of the container. Gas is then introduced into the container as illustrated in Figure 5d; optionally the gas may be under pressure.

Once the desired amount of gas has been introduced to the container the container's lid is lowered as illustrated in Figure 5e. The container may then be sealed as illustrated in Figure 5f and described above.

Any other suitable method may be used to introduce a modified or controlled atmosphere into the container.

## Claims

1. A method of sealing a container comprising a metal part, a plastic part having a thickness of at least 300 microns and a sealing layer, the method including the steps of bringing the metal part and plastic part into contact and bonding the metal part to the plastic part.

2. A method of sealing a container as recited in claim 1 wherein the step of bonding the metal part to the plastic part comprises the steps of applying a first and a second heating element to complimentary sections of the respective metal and plastic parts and raising the temperature of the heating elements such that the complimentary sections of the metal and plastic parts are bonded together.

3. A method of sealing a container as claimed in Claim 2 wherein the first heating element is applied to the metal part and the second heating eleme nt is applied to the plastic part, the first heating element being heated to a higher temperature than the second heating element.

4. A method of sealing a container as claimed in Claim 2 or Claim 3 wherein the step of heat sealing includes the step of heating the first heating element to a temperature between 120°C and 240°C.

5. A method of sealing a container as claimed in any of Claims 2 to 4 wherein the step of heat sealing includes the step of heating the second heating element to a temperature between 50°C and 100°C.

6. A method of sealing a container as claimed in any of Claims 3 to 5 wherein the first and second heating elements are applied to the metal and plastic parts for between 1 and 2.5 seconds

7. A method of sealing a container as claimed in Claim 1 wherein the step of bonding the metal part to the plastic part comprises the steps of exposing metal and plastic parts to a first and a second electrode respectively and causing the electrodes to emit radio frequency waves thereby causing the metal and plastic parts to bond together.

8. A method of sealing a container as claimed in any preceding claim wherein the plastic part is made from a semi-rigid plastic.

9. A method of sealing a container as claimed in any preceding claim wherein the plastic part is manufactured from APET or PVC.

10. A method of sealing a container as claimed in any preceding claim wherein the plastic part has the sealing layer co-extruded, coated or laminated to it; the sealing layer adapted to seal to the metal part laminated to it.

11. A method of sealing a container as claimed in Claim 10 wherein the sealing layer comprises a compatible sealing material adapted to form a peelable bond with a metal.

12. A method of sealing a container as claimed in Claim 10 or Claim 11 wherein the sealing layer has a thickness between 5 and 50 microns.

13. A method of sealing a container as claimed in any preceding claim further comprising the step of laminating the metal part with a modified epoxy layer.

14. A method of sealing a container as claimed in any preceding claim wherein the atmosphere within the container is modified to a predetermined composition prior to sealing the container.

15. A method of sealing a container as claimed in any preceding claim wherein the metal part is a tray adapted to hold food and the plastic part is a domed lid for the tray.

16. A method of sealing a container as claimed in any preceding claim wherein the metal part comprises an aluminium tray.

17. A container comprising a metal part and a plastic part sealed using the method of any of Claims 1 to 16.

18. A metal tray for use in the method of any of Claims 1 to 16.

19. A plastic lid for use in the method of any of Claims 1 to 16.
